# EUROPEAN PATENT APPLICATION

(11) **EP 4 379 868 A1**
(43) Date of publication of application: **05.06.2024**
(21) Application number: 22849216.1
(22) Date of filing: 08.07.2022
(51) Int. Cl.: H01M 4/62, H01M 4/139, H01M 10/052, H01M 10/0562

(54) **SLURRY COMPOSITION FOR ALL-SOLID-STATE SECONDARY BATTERIES, SOLID ELECTROLYTE-CONTAINING LAYER, AND ALL-SOLID-STATE SECONDARY BATTERY**

(30) Priority: 30.07.2021 JP 2021126205
(71) Applicant: Zeon Corporation, Tokyo 100-8246 (JP)
(72) Inventor: MATSUO, Yusaku, Tokyo 100-8246 (JP); SONOBE, Kenya, Tokyo 100-8246 (JP)
(74) Representative: Maiwald GmbH
(86) International application number: PCT/JP2022/027162
(87) International publication number: WO 2023/008151

(57) **Abstract**

Provided is a slurry composition for an all-solid-state secondary battery that is capable of forming a solid electrolyte-containing layer that can cause an all-solid-state secondary battery to display excellent output characteristics and cycle characteristics. The slurry composition contains a polymer A, an inorganic solid electrolyte, and a solvent. The polymer A includes a polysulfide bond-containing monomer unit in a proportion of not less than 0.5 mass% and not more than 9.5 mass%. The polymer A includes a (meth)acrylic acid ester monomer unit in a proportion of not less than 10.0 mass% and not more than 95.0 mass%.

## Description

### TECHNICAL FIELD

The present disclosure relates to a slurry composition for an all-solid-state secondary battery, a solid electrolyte-containing layer, and an all-solid-state secondary battery.

### BACKGROUND

Demand for secondary batteries such as lithium ion secondary batteries has been increasing in recent years for various applications such as mobile information terminals, mobile electronic devices, and other mobile terminals, and also domestic small power storage devices, motorcycles, electric vehicles, and hybrid electric vehicles. This expansion of applications of secondary batteries has been accompanied by demand for further improvement of secondary battery safety.

All-solid-state secondary batteries in which an inorganic solid electrolyte is used instead of an organic solvent electrolyte having high flammability and high risk of catching fire upon leakage are attracting interest as secondary batteries having high safety. An all-solid-state secondary battery includes solid electrolyte-containing layers (electrode mixed material layer and solid electrolyte layer) that are formed by binding components such as an inorganic solid electrolyte using a polymer as a binder. Formation of a solid electrolyte-containing layer is performed using a slurry composition for an all-solid-state secondary battery that contains an inorganic solid electrolyte, a polymer as a binder, and a solvent.

Improvements have been made to polymers used as binders and slurry compositions containing such polymers with the aim of improving the performance of all-solid-state secondary batteries (for example, refer to Patent Literature (PTL) 1).

### CITATION LIST

### Patent Literature

PTL 1: WO2020/045227A1

### SUMMARY

### (Technical Problem)

However, there is room for further improvement of a conventional slurry composition such as described above in terms of causing an all-solid-state secondary battery to display even better output characteristics and cycle characteristics.

Accordingly, one object of the present disclosure is to provide a slurry composition for an all-solid-state secondary battery that is capable of forming a solid electrolyte-containing layer that can cause an all-solid-state secondary battery to display excellent output characteristics and cycle characteristics.

Another object of the present disclosure is to provide a solid electrolyte-containing layer that can cause an all-solid-state secondary battery to display excellent output characteristics and cycle characteristics and an all-solid-state secondary battery that has excellent output characteristics and cycle characteristics.

### (Solution to Problem)

The inventors conducted diligent investigation with the aim of solving the problem set forth above. The inventors made a new discovery that by using a specific polymer A as a binder in formation of a solid electrolyte-containing layer using a slurry composition that contains an inorganic solid electrolyte, a binder, and a solvent, it is possible to cause an all-solid-state secondary battery to display excellent output characteristics and cycle characteristics through the obtained solid electrolyte-containing layer. In this manner, the inventors completed the present disclosure.

Specifically, the present disclosure aims to advantageously solve the problem set forth above, and, according to the present disclosure, slurry compositions for an all-solid-state secondary battery according to the following [1] to [9], a solid electrolyte-containing layer according to the following [10], and an all-solid-state secondary battery according to the following [11] are provided.

[1] A slurry composition for an all-solid-state secondary battery comprising a polymer A, an inorganic solid electrolyte, and a solvent, wherein the polymer A includes a polysulfide bond-containing monomer unit in a proportion of not less than 0.5 mass% and not more than 9.5 mass% and includes a (meth)acrylic acid ester monomer unit in a proportion of not less than 10.0 mass% and not more than 95.0 mass%.

By forming a solid electrolyte-containing layer using a slurry composition that contains the above-described polymer A, an inorganic solid electrolyte, and a solvent, it is possible to cause an all-solid-state secondary battery to display excellent output characteristics and cycle characteristics.

The phrase "includes a monomer unit" as used in the present disclosure means that "a structural unit derived from that monomer is included in a polymer obtained using the monomer". Moreover, the proportional contents (mass%) of "structural units" (inclusive of "monomer units") in a polymer referred to in the present disclosure can be measured by a nuclear magnetic resonance (NMR) method such as ¹H-NMR.

The term "polysulfide bond" as used in the present disclosure refers to a structure formed through covalent bonding of two or more sulfur atoms (S). For example, a disulfide bond (-S-S-), a trisulfide bond (-S-S-S-), a tetrasulfide bond (-S-S-S-S-), or the like is present.

In the present disclosure, "(meth)acryl" is used to indicate "acryl" and/or "methacryl".

The term "(meth)acrylic acid ester monomer unit" as used in the present disclosure is not inclusive of a monomer unit that includes a carboxy group and a (meth)acrylic acid ester structure, a monomer unit that includes a hydroxy group and a (meth)acrylic acid ester structure, and a monomer unit that includes a nitrile group and a (meth)acrylic acid ester structure. Such structural units are considered to correspond to a "carboxy group-containing monomer unit", a "hydroxy group-containing monomer unit", and a "nitrile group-containing monomer unit", respectively. In other words, a monomer that includes a (meth)acrylic acid ester structure and any one of a carboxy group, a hydroxy group, and a nitrile group is considered to correspond to a "carboxy group-containing monomer", a "hydroxy group-containing monomer", or a "nitrile group-containing monomer" in the present disclosure, and does not correspond to a "(meth)acrylic acid ester monomer".

[2] The slurry composition for an all-solid-state secondary battery according to the foregoing [1], wherein the solvent includes one or more selected from the group consisting of an aromatic hydrocarbon, a ketone, an ester, and an ether.

By using at least any one of the above-described solvents, it is possible to further improve output characteristics and cycle characteristics of an all-solid-state secondary battery.

[3] The slurry composition for an all-solid-state secondary battery according to the foregoing [1] or [2], wherein the polymer A further includes one or more selected from the group consisting of a carboxy group-containing monomer unit, a hydroxy group-containing monomer unit, a nitrile group-containing monomer unit, an aromatic vinyl monomer unit, an aliphatic conjugated diene monomer unit, and an alkylene structural unit.

When the polymer A includes at least any one of the above-described structural units in addition to a polysulfide bond-containing monomer unit and a (meth)acrylic acid ester monomer unit, output characteristics and cycle characteristics of an all-solid-state secondary battery can be further improved.

The phrase "includes an alkylene structural unit" as used in the present disclosure means that "a repeating unit composed of only an alkylene structure represented by a general formula -CₖH₂ₖ- (k is an integer of 2 or more) is included in a polymer".

A monomer unit that includes an aromatic ring and a (meth)acrylic acid ester structure (subsequently described "aromatic ring-containing (meth)acrylic acid ester monomer unit") is considered to correspond to a "(meth)acrylic acid ester monomer unit" in the present disclosure, and does not correspond to an "aromatic vinyl monomer unit". In other words, a monomer that includes a (meth)acrylic acid ester structure and an aromatic ring is considered to correspond to a "(meth)acrylic acid ester monomer" in the present disclosure, and does not correspond to an "aromatic vinyl monomer".

[4] The slurry composition for an all-solid-state secondary battery according to the foregoing [1] or [2], wherein the polymer A further includes a nitrile group-containing monomer unit.

When the polymer A includes a nitrile group-containing monomer unit in addition to a polysulfide bond-containing monomer unit and a (meth)acrylic acid ester monomer unit, output characteristics and cycle characteristics of an all-solid-state secondary battery can be sufficiently improved.

[5] The slurry composition for an all-solid-state secondary battery according to any one of the foregoing [1] to [4], wherein the polysulfide bond-containing monomer unit has a partial structure of formula (I), shown below, 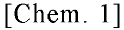 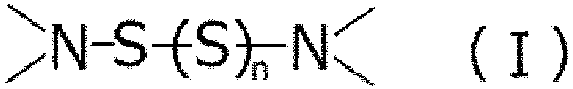 where, in formula (I), n is an integer of not less than 1 and not more than 10.

When a polysulfide bond-containing monomer unit included in the polymer A has the above-described partial structure of formula (I), cycle characteristics of an all-solid-state secondary battery can be further improved.

[6] The slurry composition for an all-solid-state secondary battery according to any one of the foregoing [1] to [5], wherein the inorganic solid electrolyte includes either or both of a sulfide inorganic solid electrolyte and an oxide inorganic solid electrolyte.

When a sulfide inorganic solid electrolyte and/or an oxide inorganic solid electrolyte is used as the inorganic solid electrolyte, output characteristics and cycle characteristics of an all-solid-state secondary battery can be further improved.

[7] The slurry composition for an all-solid-state secondary battery according to any one of the foregoing [1] to [6], wherein content of the polymer A is not less than 0.1 parts by mass and not more than 15.0 parts by mass per 100 parts by mass of the inorganic solid electrolyte.

When the content of the polymer A is within the range set forth above, output characteristics and cycle characteristics of an all-solid-state secondary battery can be further improved.

[8] The slurry composition for an all-solid-state secondary battery according to any one of the foregoing [1] to [7], further comprising an electrode active material.

The slurry composition for an all-solid-state secondary battery containing an electrode active material can be used as a slurry composition for an electrode mixed material layer.

In the present disclosure, the term "slurry composition for an electrode mixed material layer" refers to a composition that contains an inorganic solid electrolyte, the polymer A, a solvent, and an electrode active material, whereas the term "slurry composition for a solid electrolyte layer" refers to a composition that contains an inorganic solid electrolyte, the polymer A, and a solvent but does not contain an electrode active material.

[9] The slurry composition for an all-solid-state secondary battery according to the foregoing [8], further comprising a conductive material.

By using a slurry composition for an electrode mixed material layer that contains a conductive material, it is possible to further improve output characteristics and cycle characteristics of an all-solid-state secondary battery.

[10] A solid electrolyte-containing layer formed using the slurry composition for an all-solid-state secondary battery according to any one of the foregoing [1] to [9].

A solid electrolyte-containing layer that is formed using any one of the slurry compositions set forth above can cause an all-solid-state secondary battery to display excellent output characteristics and cycle characteristics.

[11] An all-solid-state secondary battery comprising the solid electrolyte-containing layer according to the foregoing [10].

An all-solid-state secondary battery that includes the solid electrolyte-containing layer set forth above has excellent output characteristics and cycle characteristics.

### (Advantageous Effect)

According to the present disclosure, it is possible to provide a slurry composition for an all-solid-state secondary battery that is capable of forming a solid electrolyte-containing layer that can cause an all-solid-state secondary battery to display excellent output characteristics and cycle characteristics.

Moreover, according to the present disclosure, it is possible to provide a solid electrolyte-containing layer that can cause an all-solid-state secondary battery to display excellent output characteristics and cycle characteristics and an all-solid-state secondary battery that has excellent output characteristics and cycle characteristics.

### DETAILED DESCRIPTION

The following provides a detailed description of embodiments of the present disclosure.

A presently disclosed slurry composition for an all-solid-state secondary battery is used in formation of a solid electrolyte-containing layer, such as an electrode mixed material layer or a solid electrolyte layer, that is used in an all-solid-state secondary battery, such as an all-solid-state lithium ion secondary battery. In other words, the presently disclosed slurry composition for an all-solid-state secondary battery can be used as a slurry composition for an electrode mixed material layer or as a slurry composition for a solid electrolyte layer. Moreover, a presently disclosed solid electrolyte-containing layer is formed using the presently disclosed slurry composition for an all-solid-state secondary battery. Furthermore, a presently disclosed all-solid-state secondary battery includes the presently disclosed solid electrolyte-containing layer.

### (Slurry composition for all-solid-state secondary battery)

The presently disclosed slurry composition contains at least a polymer A, an inorganic solid electrolyte, and a solvent and can optionally contain an electrode active material, a conductive material, and/or other components.

In the presently disclosed slurry composition, the polymer A is required to include a polysulfide bond-containing monomer unit in a proportion of not less than 0.5 mass% and not more than 9.5 mass% and to include a (meth)acrylic acid ester monomer unit in a proportion of not less than 10.0 mass% and not more than 95.0 mass%. By forming a solid electrolyte-containing layer using a slurry composition that contains such a polymer A, it is possible to cause an all-solid-state secondary battery to display excellent output characteristics and cycle characteristics.

Although it is not clear why a solid electrolyte-containing layer that is formed from a slurry composition containing the polymer A can improve output characteristics and cycle characteristics of an all-solid-state secondary battery, the reason for this is presumed to be as follows.

Firstly, a polysulfide bond that constitutes part of a polysulfide bond-containing monomer unit has a function of reforming a severed covalent bond between sulfur atoms (S-S bond) and restoring the original chemical structure of the polymer A (self-repairing function) even in a situation in which this covalent bond is severed upon being subjected to mechanical load or the like. Through this self-repairing function, a binder that is formed of the polymer A including a polysulfide bond-containing monomer unit can suppress excessive deformation and damage of an electrode mixed material layer or solid electrolyte layer when these layers are subjected to mechanical load or the like through expansion or contraction of an electrode active material that arises during repeated charging and discharging of an all-solid-state secondary battery. Therefore, by forming an electrode mixed material layer or solid electrolyte layer using the polymer A that includes a polysulfide bond-containing monomer unit in a proportion of 0.5 mass% or more, it is possible to improve cycle characteristics of an all-solid-state secondary battery.

However, excessively increasing the proportional content of polysulfide bond-containing monomer units in the polymer A results in hardening of the polymer A. Moreover, excessive hardening of the polymer A results in the formation of gaps between an electrode mixed material layer and a solid electrolyte layer in an all-solid-state secondary battery obtained through pressing and makes it difficult to form a uniform interface between these layers. In response to the above, the polymer A that is contained in the presently disclosed slurry composition includes a polysulfide bond-containing monomer unit in a proportion of 9.5 mass% or less and also includes a (meth)acrylic acid ester monomer unit, which can contribute to improving flexibility, in a proportion of not less than 10.0 mass% and not more than 95.0 mass%. This makes it possible to inhibit excessive hardening of the polymer A and enables the formation of a uniform interface without gaps between an electrode mixed material layer and a solid electrolyte layer. Consequently, ion conductivity between the electrode mixed material layer and the solid electrolyte layer is sufficiently ensured, and an all-solid-state secondary battery can be caused to display excellent output characteristics.

### <Polymer A>

The polymer A functions as a binder that binds components such as the inorganic solid electrolyte in a solid electrolyte-containing layer formed from the slurry composition.

### «Chemical composition»

The polymer A is required to include a polysulfide bond-containing monomer unit in a proportion of not less than 0.5 mass% and not more than 9.5 mass% and to include a (meth)acrylic acid ester monomer unit in a proportion of not less than 10 mass% and not more than 95 mass% as previously described. Note that the polymer A may include structural units other than a polysulfide bond-containing monomer unit and a (meth)acrylic acid ester monomer unit (i.e., other structural units).

### [Polysulfide bond-containing monomer unit]

A polysulfide bond-containing monomer unit can be formed through a polysulfide bond-containing monomer that includes a polysulfide bond and a copolymerizable carbon-carbon unsaturated bond (for example, an ethylenically unsaturated bond).

Note that the polymer A may include just one type of polysulfide bond-containing monomer unit or may include two or more types of polysulfide bond-containing monomer units. In other words, one polysulfide bond-containing monomer that can form a polysulfide bond-containing monomer unit may be used individually, or two or more of such polysulfide bond-containing monomers may be used in combination.

The polysulfide bond-containing monomer unit and polysulfide bond-containing monomer preferably have a partial structure of the following formula (I) from a viewpoint of causing good expression of the self-repairing function by the polysulfide bond-containing monomer unit and further improving cycle characteristics of an all-solid-state secondary battery.

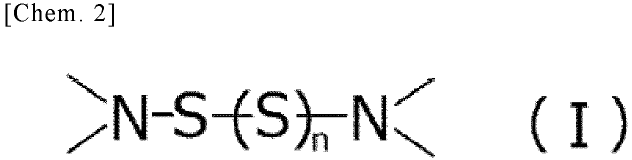

In formula (I), n is an integer of not less than 1 and not more than 10, and, from a viewpoint of further improving cycle characteristics of an all-solid-state secondary battery, is preferably an integer of not less than 1 and not more than 8, is more preferably an integer of not less than 1 and not more than 5, is even more preferably an integer of not less than 1 and not more than 3, and is particularly preferably 1.

One example of a polysulfide bond-containing monomer that has the partial structure of formula (I) described above is a compound of the following formula (II). By using a compound of the following formula (II) as a polysulfide bond-containing monomer, it is possible to further improve cycle characteristics of an all-solid-state secondary battery.

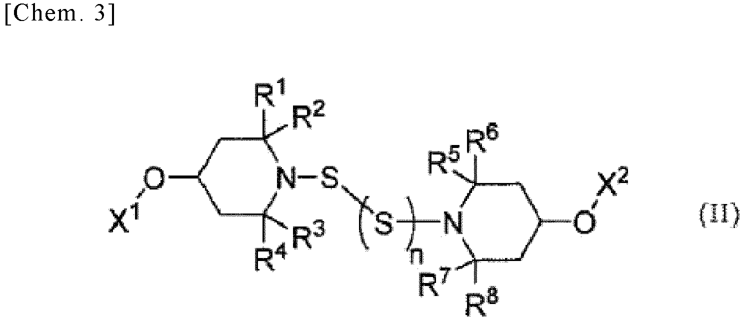

In formula (II), X¹ and X² are each, independently of each other, an acryl group or a methacryl group, R¹ to R⁸ are each, independently of one another, a hydrogen atom or a hydrocarbon group having a carbon number of not less than 1 and not more than 6, and n is an integer of not less than 1 and not more than 10 in the same manner as in formula (I).

X¹ and X² in formula (II) are preferably each a methacryl group from a viewpoint of further improving cycle characteristics of an all-solid-state secondary battery. Note that X¹ and X² may be the same structure or may be different structures from each other.

The hydrocarbon group having a carbon number of not less than 1 and not more than 6 that constitutes R¹ to R⁸ in formula (II) may be a saturated aliphatic hydrocarbon group such as a methyl group, an ethyl group, a propyl group (n-propyl group or isopropyl group), or a butyl group (n-butyl group, sec-butyl group, isobutyl group, or tert-butyl group), or may be a phenyl group.

From a viewpoint of further improving cycle characteristics of an all-solid-state secondary battery, R¹ to R⁸ in formula (II) are preferably each a hydrogen atom, a methyl group, an ethyl group, an n-propyl group, an n-butyl group, a t-butyl group, or a phenyl group, more preferably a methyl group or an ethyl group, and even more preferably a methyl group.

Note that R¹ to R⁸ may be the same structure or may be different structures from one another.

In addition, from a viewpoint of further improving cycle characteristics of an all-solid-state secondary battery, n in formula (II) is preferably an integer of not less than 1 and not more than 8, is more preferably an integer of not less than 1 and not more than 5, is even more preferably an integer of not less than 1 and not more than 3, and is particularly preferably 1 in the same manner as n in the previously described formula (I).

Among compounds of formula (II), the following compounds No. 1 to No. 20 in which X¹ and X² are each a methacryl group and n is an integer of not less than 1 and not more than 5 are preferable, and the following compounds No. 1 to No. 16 in which X¹ and X² are each a methacryl group and n is 1 are more preferable.

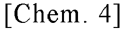

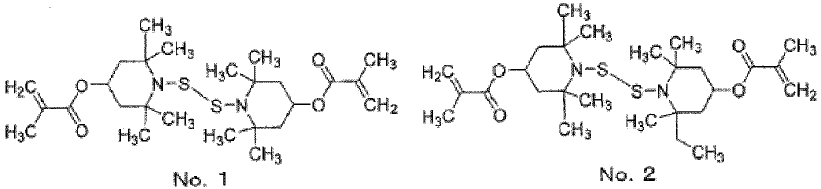

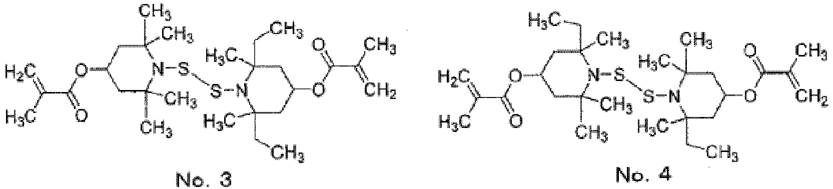

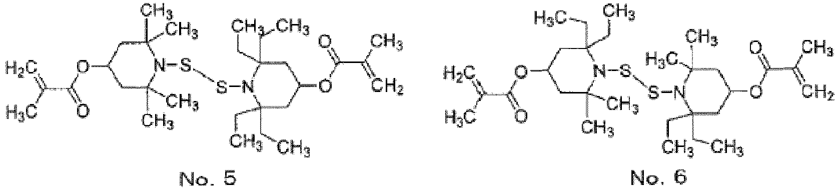

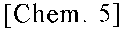

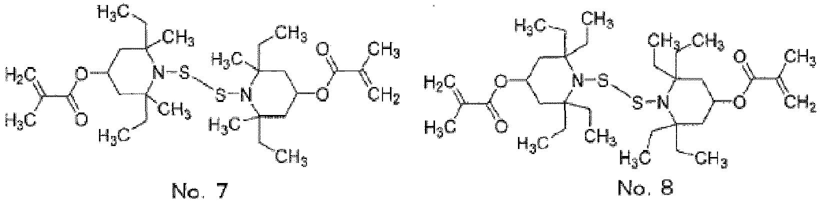

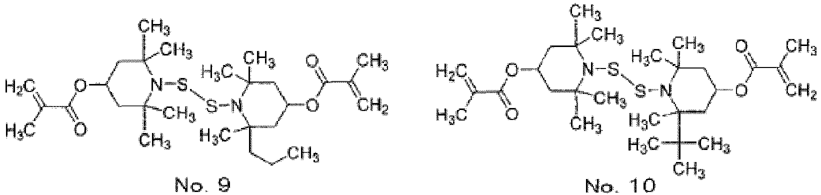

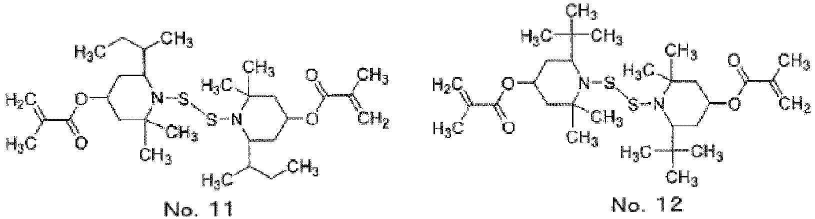

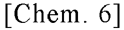

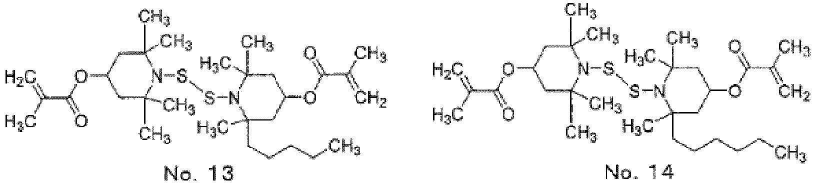

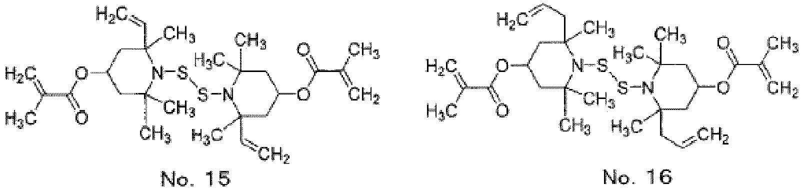

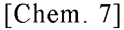

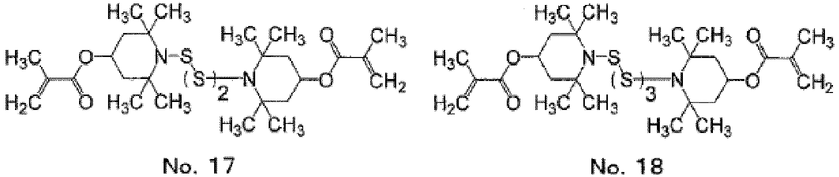

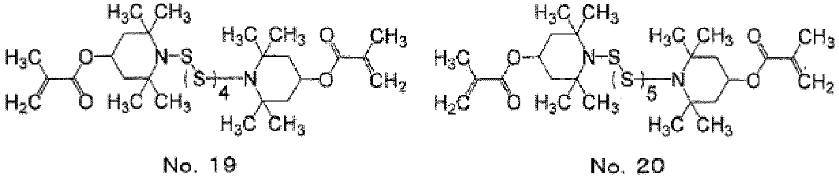

Note that the compounds of formula (II) described above can be produced by a known method. For example, compound No. 1 described above can be produced by reacting 2,2,6,6-tetramethyl-4-piperidyl methacrylate and disulfur dichloride.

The proportional content of polysulfide bond-containing monomer units in the polymer A when all structural units (all repeating units) forming the polymer A are taken to be 100 mass% is required to be not less than 0.5 mass% and not more than 9.5 mass%, is preferably 1.0 mass% or more, more preferably 1.5 mass% or more, and even more preferably 4.0 mass% or more, and is preferably 8.0 mass% or less, more preferably 7.0 mass% or less, even more preferably 6.0 mass% or less, and particularly preferably 5.0 mass% or less. Cycle characteristics of an all-solid-state secondary battery deteriorate in a situation in which the proportion constituted by polysulfide bond-containing monomer units among all structural units of the polymer A is less than 0.5 mass%, which is presumed to be because the self-repairing function described above is not sufficiently expressed. On the other hand, rate characteristics of an all-solid-state secondary battery deteriorate in a situation in which the proportion constituted by polysulfide bond-containing monomer units among all structural units of the polymer A is more than 9.5 mass%, which is presumed to be due to the formation of gaps between an electrode mixed material layer and a solid electrolyte layer caused by excessive hardening of the polymer A. Cycle characteristics of the all-solid-state secondary battery also deteriorate, which is presumed to be due to loss of close adherence between the electrode mixed material layer and the solid electrolyte layer.

### [(Meth)acrylic acid ester monomer unit]

The (meth)acrylic acid ester monomer unit may be a (meth)acrylic acid alkyl ester monomer unit, a (meth)acrylic acid alkoxy ester monomer unit, a fluorine-containing (meth)acrylic acid ester monomer unit, a polyoxyalkylene group-containing (meth)acrylic acid ester monomer unit, an aromatic ring-containing (meth)acrylic acid ester monomer unit, or the like.

Note that the polymer A may include just one type of (meth)acrylic acid ester monomer unit or may include two or more types of (meth)acrylic acid ester monomer units. In other words, one (meth)acrylic acid ester monomer (subsequently described (meth)acrylic acid alkyl ester monomer, (meth)acrylic acid alkoxy ester monomer, fluorine-containing (meth)acrylic acid ester monomer, polyoxyalkylene group-containing (meth)acrylic acid ester monomer, aromatic ring-containing (meth)acrylic acid ester monomer, or the like) that can form a (meth)acrylic acid ester monomer unit may be used individually, or two or more of such (meth)acrylic acid ester monomers may be used in combination.

Examples of (meth)acrylic acid alkyl ester monomers that can form a (meth)acrylic acid alkyl ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, nonyl acrylate, decyl acrylate, lauryl acrylate, n-tetradecyl acrylate, stearyl acrylate, 2-ethylhexyl acrylate, and cyclohexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, nonyl methacrylate, decyl methacrylate, lauryl methacrylate, tridecyl methacrylate, n-tetradecyl methacrylate, stearyl methacrylate, 2-ethylhexyl methacrylate, and cyclohexyl methacrylate.

Examples of (meth)acrylic acid alkoxy ester monomers that can form a (meth)acrylic acid alkoxy ester monomer unit include acrylic acid alkoxy esters such as 2-methoxyethyl acrylate and 2-ethoxyethyl acrylate; and methacrylic acid alkoxy esters such as 2-methoxyethyl methacrylate and 2-ethoxyethyl methacrylate.

Examples of fluorine-containing (meth)acrylic acid ester monomers that can form a fluorine-containing (meth)acrylic acid ester monomer unit include 2-(perfluoroalkyl)ethyl acrylates such as 2-(perfluorobutyl)ethyl acrylate and 2-(perfluoropentyl)ethyl acrylate; and 2-(perfluoroalkyl)ethyl methacrylates such as 2-(perfluorobutyl)ethyl methacrylate and 2-(perfluoropentyl)ethyl methacrylate.

Examples of polyoxyalkylene group-containing (meth)acrylic acid ester monomers that can form a polyoxyalkylene group-containing (meth)acrylic acid ester monomer unit include compounds of the following formula (III).

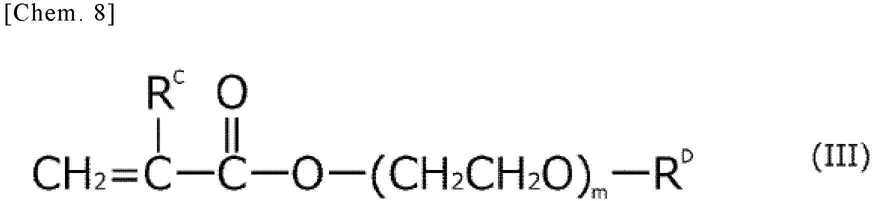

In formula (III), R^{C} is a hydrogen atom or a methyl group, R^{D} is a hydrogen atom, a phenyl group, an alkyl group having a carbon number of not less than 1 and not more than 6, or a phenyl group including not less than one and not more than three alkyl groups having a carbon number of not less than 1 and not more than 6, and m is an integer of 3 or more.

The alkyl group having a carbon number of not less than 1 and not more than 6 that constitutes all or part of R^{D} may be a methyl group, an ethyl group, an n-propyl group, an isopropyl group, an n-butyl group, a t-butyl group, an isobutyl group, or a sec-butyl group, for example, without any specific limitations.

R^{C} in formula (III) is preferably a hydrogen atom from a viewpoint of further improving rate characteristics and cycle characteristics of an all-solid-state secondary battery.

R^{D} in formula (III) is preferably a hydrogen atom or an alkyl group having a carbon number of not less than 1 and not more than 6 from a viewpoint of further improving rate characteristics and cycle characteristics of an all-solid-state secondary battery, and is more preferably a methyl group.

Moreover, from a viewpoint of further improving rate characteristics and cycle characteristics of an all-solid-state secondary battery, m in formula (III) is preferably an integer of 4 or more, and more preferably an integer of 5 or more, and is preferably an integer of 25 or less, and more preferably an integer of 15 or less.

Specific examples of compounds of formula (III) described above include polyoxyethylene group-containing (meth)acrylates such as AM-90G, AM-130G, M-90G, and M-230G (product names) produced by Shin-Nakamura Chemical Co., Ltd. and BLEMMER^{®} (BLEMMER is a registered trademark in Japan, other countries, or both) PME-200 (product name) produced by NOF Corporation.

Examples of aromatic ring-containing (meth)acrylic acid ester monomers that can form an aromatic ring-containing (meth)acrylic acid ester monomer unit include phenoxyethyl acrylate and phenoxyethyl methacrylate.

Of the above-described (meth)acrylic acid ester monomers, n-butyl acrylate, ethyl acrylate, AM-90G (methoxy polyethylene glycol #400 acrylate; corresponding to compound of formula (III) in which R^{C} is a hydrogen atom, R^{D} is a methyl group, and m = 9), 2-ethylhexyl acrylate, and phenoxyethyl acrylate are preferable from a viewpoint of even further improving rate characteristics and cycle characteristics of an all-solid-state secondary battery.

The proportional content of (meth)acrylic acid ester monomer units in the polymer A when all structural units (all repeating units) forming the polymer A are taken to be 100 mass% is required to be not less than 10.0 mass% and not more than 95.0 mass%, is preferably 15.0 mass% or more, more preferably 20.0 mass% or more, and even more preferably 30.0 mass% or more, and is preferably 90.0 mass% or less, and more preferably 80.0 mass% or less. Rate characteristics of an all-solid-state secondary battery deteriorate in a situation in which the proportion constituted by (meth)acrylic acid ester monomer units among all structural units of the polymer A is less than 10.0 mass%, which is presumed to be due to formation of gaps between an electrode mixed material layer and a solid electrolyte layer caused by excessive hardening of the polymer A. Cycle characteristics of the all-solid-state secondary battery also deteriorate, which is presumed to be due to loss of close adherence between the electrode mixed material layer and the solid electrolyte layer. On the other hand, cycle characteristics of an all-solid-state secondary battery deteriorate in a situation in which the proportion constituted by (meth)acrylic acid ester monomer units among all structural units of the polymer A is more than 95.0 mass%, which is presumed to be due to the polymer A becoming excessively flexible.

### [Other structural units]

Examples of structural units other than a polysulfide bond-containing monomer unit and a (meth)acrylic acid ester monomer unit that are preferable from a viewpoint of further improving rate characteristics and cycle characteristics of an all-solid-state secondary battery include a carboxy group-containing monomer unit, a hydroxy group-containing monomer unit, a nitrile group-containing monomer unit, an aromatic vinyl monomer unit, an aliphatic conjugated diene monomer unit, and an alkylene structural unit.

Note that the polymer A may include just one type of other structural unit or may include two or more types of other structural units. In other words, one monomer that can form another structural unit may be used individually, or two or more of such monomers may be used in combination.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-transaryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of hydroxy group-containing monomers that can form a hydroxy group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In the present disclosure, "(meth)allyl" is used to indicate "allyl" and/or "methallyl".

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile.

Examples of aromatic vinyl monomers that can form an aromatic vinyl monomer unit include styrene, styrene sulfonic acid and salts thereof, α-methylstyrene, p-t-butylstyrene, butoxystyrene, vinyltoluene, chlorostyrene, divinylbenzene, and vinylnaphthalene.

Examples of aliphatic conjugated diene monomers that can form an aliphatic conjugated diene monomer unit include conjugated diene compounds having a carbon number of 4 or more such as 1,3-butadiene, isoprene, 2,3-dimethyl-1,3-butadiene, 2-ethyl-1,3-butadiene, and 1,3-pentadiene.

Although an alkylene structural unit may be linear or branched, it is preferable that the alkylene structural unit is linear (i.e., is a linear alkylene structural unit) from a viewpoint of sufficiently improving rate characteristics and cycle characteristics of an all-solid-state secondary battery. Moreover, the carbon number of the alkylene structural unit is preferably 4 or more (i.e., k in the previously described general formula -CₖH₂ₖ- is preferably an integer of 4 or more).

Examples of methods by which an alkylene structural unit can be introduced into the polymer A include, but are not specifically limited to, the following methods (1) and (2).
(1) A method in which a polymer is produced from a monomer composition containing an aliphatic conjugated diene monomer and then this polymer is hydrogenated so as to convert an aliphatic conjugated diene monomer unit to an alkylene structural unit
(2) A method in which a polymer is produced from a monomer composition containing a 1-olefin monomer

Of these methods, method (1) is preferable in terms of ease of production of the polymer A.

Examples of aliphatic conjugated diene monomers that can be used in method (1) include those that were previously described as "aliphatic conjugated diene monomers that can form an aliphatic conjugated diene monomer unit". Of these aliphatic conjugated diene monomers, 1,3-butadiene is preferable. In other words, the alkylene structural unit is preferably a structural unit obtained through hydrogenation of an aliphatic conjugated diene monomer unit (i.e., is preferably a hydrogenated aliphatic conjugated diene unit), and is more preferably a structural unit obtained through hydrogenation of a 1,3-butadiene monomer unit (i.e., is more preferably a hydrogenated 1,3-butadiene unit).

Moreover, the 1-olefin monomer may be ethylene, propylene, 1-butene, or the like, for example.

The proportional content of other structural units in the polymer A when all structural units (all repeating units) forming the polymer A are taken to be 100 mass% is preferably 0.5 mass% or more, more preferably 1.0 mass% or more, and even more preferably 1.5 mass% or more, and is preferably 80.0 mass% or less, more preferably 75.0 mass% or less, and even more preferably 70.0 mass% or less. When the proportion constituted by other structural units among all structural units of the polymer A is within any of the ranges set forth above, rate characteristics and cycle characteristics of an all-solid-state secondary battery can be further improved.

In one embodiment of the presently disclosed slurry composition, the polymer A preferably includes a nitrile group-containing monomer unit, and more preferably includes an acrylonitrile unit from a viewpoint of sufficiently improving rate characteristics and cycle characteristics of an all-solid-state secondary battery.

In a case in which the polymer A includes a nitrile group-containing monomer unit, the proportional content of nitrile group-containing monomer units in the polymer A when all structural units (all repeating units) forming the polymer A are taken to be 100 mass% is preferably 0.5 mass% or more, more preferably 1.0 mass% or more, even more preferably 1.5 mass% or more, and particularly preferably 3.0 mass% or more, and is preferably 50.0 mass% or less, more preferably 40.0 mass% or less, even more preferably 30.0 mass% or less, and particularly preferably 20.0 mass% or less from a viewpoint of further improving rate characteristics and cycle characteristics of an all-solid-state secondary battery.

### <<Breaking strength recovery rate of film formed of polymer A»

When the breaking strength of a film (polymer film) obtained through shaping of the polymer A is taken to be W1 and the breaking strength of a film (rejoined film) obtained through cutting of the polymer film and subsequent rejoining of two cut surfaces resulting therefrom is taken to be W2, a breaking strength recovery rate determined by W2/W1 × 100(%) is preferably not less than 60% and not more than 100%, more preferably not less than 70% and not more than 100%, and even more preferably not less than 80% and not more than 100%. When the breaking strength recovery rate of a film formed of the polymer A is within any of the ranges set forth above, cycle characteristics of an all-solid-state secondary battery can be further improved, which is presumed to be due to good expression of the self-repairing function by the polysulfide bond-containing monomer unit included in the polymer A. The "breaking strength recovery rate" of a film formed of the polymer A can be improved by changing the type or increasing the proportional content of the polysulfide bond-containing monomer unit included in the polymer A.

Note that the "breaking strength recovery rate" of a film formed of the polymer A can be measured by a method described in detail in the EXAMPLES section.

### <<Weight-average molecular weight>>

The weight-average molecular weight of the polymer A is preferably 10,000 or more, more preferably 25,000 or more, even more preferably 50,000 or more, further preferably 100,000 or more, and particularly preferably 150,000 or more, and is preferably 10,000,000 or less, more preferably 5,000,000 or less, even more preferably 2,500,000 or less, and particularly preferably 2,000,000 or less. When the weight-average molecular weight of the polymer A is 10,000 or more, adhesiveness of a solid electrolyte-containing layer can be increased while also further improving cycle characteristics of an all-solid-state secondary battery. On the other hand, when the weight-average molecular weight of the polymer A is 10,000,000 or less, excessive thickening of the slurry composition can be inhibited, and good coatability can be sufficiently ensured.

Note that the "weight-average molecular weight" of the polymer A can be measured by a method described in the EXAMPLES section.

### <<Production method>>

No specific limitations are placed on the method by which the polymer A is produced. For example, the polymer A can be produced by polymerizing a monomer composition containing the monomers described above and then optionally performing hydrogenation.

The proportional content of each monomer in the monomer composition can be set in accordance with the proportional content of each monomer unit (each structural unit) in the polymer A.

The method of polymerization may be solution polymerization, suspension polymerization, bulk polymerization, emulsion polymerization, or the like without any specific limitations, but is preferably solution polymerization or emulsion polymerization from a viewpoint of setting the weight-average molecular weight of the obtained polymer A within any of the preferable ranges set forth above. Note that a known emulsifier and/or polymerization initiator can be used in each of these polymerization methods as necessary.

A known hydrogenation method such as an oil-layer hydrogenation method or a water-layer hydrogenation method can be adopted as the hydrogenation method without any specific limitations. The catalyst used in the hydrogenation may be any selective hydrogenation catalyst that is commonly known such as a palladium-based catalyst or a rhodium-based catalyst. Two or more of such catalysts may be used in combination.

### <<Content>>

The content of the above-described polymer A in the presently disclosed slurry composition is preferably 0.1 parts by mass or more, more preferably 0.5 parts by mass or more, and even more preferably 1.0 parts by mass or more per 100 parts by mass of the subsequently described inorganic solid electrolyte, and is preferably 15.0 parts by mass or less, more preferably 14.0 parts by mass or less, and even more preferably 13.0 parts by mass or less per 100 parts by mass of the inorganic solid electrolyte. When the content of the polymer A is 0.1 parts by mass or more per 100 parts by mass of the inorganic solid electrolyte, cycle characteristics of an all-solid-state secondary battery can be further improved. On the other hand, when the content of the polymer A is 15.0 parts by mass or less per 100 parts by mass of the inorganic solid electrolyte, pressability of a solid electrolyte-containing layer during production of an all-solid-state secondary battery is ensured without excessive hardening of the solid electrolyte-containing layer. In addition, output characteristics and cycle characteristics of an all-solid-state secondary battery can be further improved.

### <Inorganic solid electrolyte>

The inorganic solid electrolyte that is contained in the presently disclosed slurry composition is a substance that causes conduction of ions in an electrode or solid electrolyte layer of an all-solid-state secondary battery. The inorganic solid electrolyte may be a crystalline inorganic ion conductor, an amorphous inorganic ion conductor, or a mixture thereof without any specific limitations. In the case of an all-solid-state secondary battery that is an all-solid-state lithium ion secondary battery, for example, a crystalline inorganic lithium ion conductor, an amorphous inorganic lithium ion conductor, or a mixture thereof can normally be used as the inorganic solid electrolyte.

In particular, it is preferable that the inorganic solid electrolyte includes either or both of a sulfide inorganic solid electrolyte and an oxide inorganic solid electrolyte from a viewpoint of forming a solid electrolyte-containing layer having excellent ion conductivity and further improving output characteristics and cycle characteristics of an all-solid-state secondary battery.

Although the following describes, as one example, a case in which the slurry composition for an all-solid-state secondary battery is a slurry composition for an all-solid-state lithium ion secondary battery, the presently disclosed slurry composition for an all-solid-state secondary battery is not limited to the following example.

Examples of crystalline inorganic lithium ion conductors include Li₃N, LISICON (Li₁₄Zn(GeO₄)₄), perovskite-type lithium ion conductors (for example, Li_{0.5}La_{0.5}TiO₃), garnet-type lithium ion conductors (for example, Li₇La₃Zr₂O₁₂), LIPON (Li_{3+y}PO₄₋ₓNₓ), Thio-LISICON (Li_{3.25}Ge_{0.25}P_{0.75}S₄), and argyrodite-type lithium ion conductors (for example, Li_{5.6}PS_{4.4}Cl_{1.8}).

The crystalline inorganic lithium ion conductors described above can be used individually or as a mixture of two or more types.

The amorphous inorganic lithium ion conductor may, for example, be a sulfur atom-containing substance that displays ion conductivity. More specific examples include glass Li-Si-S-O, Li-P-S, and an amorphous inorganic lithium ion conductor obtained using a raw material composition containing Li₂S and a sulfide of an element belonging to any one of groups 13 to 15 of the periodic table.

The element belonging to any one of groups 13 to 15 may be Al, Si, Ge, P, As, Sb, or the like, for example. Moreover, the sulfide of the element belonging to any one of groups 13 to 15 may, more specifically, be Al₂S₃, SiS₂, GeS₂, P₂S₃, P₂S₅, As₂S₃, Sb₂S₃, or the like. The method by which the amorphous inorganic lithium ion conductor is synthesized using the raw material composition may be an amorphization method such as mechanical milling or melt quenching, for example. The amorphous inorganic lithium ion conductor that is obtained using the raw material composition containing Li₂S and the sulfide of the element belonging to any one of groups 13 to 15 of the periodic table is preferably Li₂S-P₂S₅, Li₂S-SiS₂, Li₂S-GeS₂, or Li₂S-Al₂S₃, and more preferably Li₂S-P₂S₅.

The amorphous inorganic lithium ion conductors described above can be used individually or as a mixture of two or more types.

Of the examples described above, an amorphous sulfide containing Li and P or Li₇La₃Zr₂O₁₂ is preferable as an inorganic solid electrolyte for an all-solid-state lithium ion secondary battery from a viewpoint of forming a solid electrolyte-containing layer having even better ion conductivity. By using an amorphous sulfide containing Li and P or Li₇La₃Zr₂O₁₂ as the inorganic solid electrolyte, it is possible to further improve output characteristics of an all-solid-state secondary battery as a result of the high lithium ion conductivity of these substances.

The amorphous sulfide containing Li and P is more preferably sulfide glass formed of Li₂S and P₂S₅ from a viewpoint of further improving output characteristics of an all-solid-state secondary battery, and is particularly preferably sulfide glass produced from a mixed raw material of Li₂S and P₂S₅ in which the molar ratio of Li₂S:P₂S₅ is 65:35 to 85:15. Moreover, the amorphous sulfide containing Li and P is preferably sulfide glass-ceramic that is obtained by reacting a mixed raw material of Li₂S and P₂S₅ in which the molar ratio of Li₂S:P₂S₅ is 65:35 to 85:15 by a mechanochemical method. The molar ratio of Li₂S:P₂S₅ in the mixed raw material is preferably 68:32 to 80:20 from a viewpoint of maintaining a state of high lithium ion conductivity.

Note that the inorganic solid electrolyte may contain one or more sulfides selected from the group consisting of Al₂S₃, B₂S₃, and SiS₂ as a starting material other than Li₂S and P₂S₅ to the extent that ion conductivity is not reduced. The addition of such a sulfide can stabilize a glass component in the inorganic solid electrolyte.

In the same manner, the inorganic solid electrolyte may contain one or more ortho-oxoacid lithium salts selected from the group consisting of Li₃PO₄, Li₄SiO₄, Li₄GeO₄, Li₃BO₃, and Li₃AlO₃, in addition to Li₂S and P₂S₅. The inclusion of such an ortho-oxoacid lithium salt can stabilize a glass component in the inorganic solid electrolyte.

The inorganic solid electrolytes described above can be used individually or as a mixture of two or more types. Moreover, the particle diameter of the inorganic solid electrolytes described above can be the same as a conventionally used inorganic solid electrolyte without any specific limitations.

### <Solvent>

The solvent that is contained in the presently disclosed slurry composition may be an organic solvent such as a chain aliphatic hydrocarbon (hexane, heptane, octane, etc.), a cyclic aliphatic hydrocarbon (cyclopentane, cyclohexane, etc.), an aromatic hydrocarbon (toluene, xylene, etc.), a ketone (ethyl methyl ketone, cyclohexanone, diisobutyl ketone, etc.), an ester (ethyl acetate, butyl acetate, butyl butyrate, isobutyl isobutyrate, hexyl butyrate, γ-butyrolactone, ε-caprolactone, etc.), a nitrile (acetonitrile, propionitrile, etc.), an ether (tetrahydrofuran, ethylene glycol diethyl ether, n-butyl ether, anisole, etc.), an alcohol (methanol, ethanol, isopropanol, ethylene glycol, ethylene glycol monomethyl ether, etc.), or an amide (N-methylpyrrolidone, N,N-dimethylformamide, etc.). Note that one solvent may be used individually, or two or more solvents may be used in combination.

Also note that an organic solvent including both an ether group and a hydroxy group is considered to correspond to an alcohol and not to an ether in the present disclosure.

Of these solvents, aromatic hydrocarbons, ketones, esters, and ethers are preferable from a viewpoint of further improving output characteristics and cycle characteristics of an all-solid-state secondary battery.

Moreover, the solvent preferably has a carbon number of 6 or more, and more preferably has a carbon number of 7 or more. By using a slurry composition that contains a solvent having a carbon number of 6 or more, it is possible to reduce electronic resistance of an all-solid-state secondary battery and further improve output characteristics and cycle characteristics of the all-solid-state secondary battery. Moreover, short-circuiting between electrodes caused by metal component deposition can be prevented.

The solvent having a carbon number of 6 or more is particularly preferably xylene (carbon number: 8), butyl butyrate (carbon number: 8), isobutyl isobutyrate (carbon number: 8), anisole (carbon number: 7), or diisobutyl ketone (carbon number: 9) from a viewpoint of further improving output characteristics and cycle characteristics of an all-solid-state secondary battery.

### <Electrode active material>

The electrode active material that is contained in the presently disclosed slurry composition (slurry composition for an electrode mixed material layer) is a material that gives and receives electrons in an electrode of an all-solid-state secondary battery. In the case of an all-solid-state secondary battery that is an all-solid-state lithium ion secondary battery, for example, a material that can occlude and release lithium is normally used as the electrode active material.

Although the following describes, as one example, a case in which the slurry composition for an all-solid-state secondary battery is a slurry composition for an all-solid-state lithium ion secondary battery, the presently disclosed slurry composition for an all-solid-state secondary battery is not limited to the following example.

A positive electrode active material for an all-solid-state lithium ion secondary battery may be a positive electrode active material that is formed of an inorganic compound or a positive electrode active material that is formed of an organic compound without any specific limitations. Note that the positive electrode active material may be a mixture of an inorganic compound and an organic compound.

The positive electrode active material formed of an inorganic compound may be a transition metal oxide, a complex oxide of lithium and a transition metal (lithium-containing complex metal oxide), a transition metal sulfide, or the like, for example. The aforementioned transition metal may be Fe, Co, Ni, Mn, or the like. Specific examples of inorganic compounds that may be used in the positive electrode active material include lithium-containing complex metal oxides such as LiCoO₂ (lithium cobalt oxide), LiNiO₂, LiMnO₂, LiMn₂O₄, LiFePO₄, and LiFeVO₄; transition metal sulfides such as TiS₂, TiS₃, and amorphous MoS₂; and transition metal oxides such as Cu₂V₂O₃, amorphous V₂O-P₂O₅, MoOs, V₂O₅, and V₆O₁₃. These compounds may have undergone partial element substitution.

The positive electrode active materials formed of inorganic compounds that are described above can be used individually or as a mixture of two or more types.

The positive electrode active material formed of an organic compound may be a polyaniline, polypyrrole, polyacene, disulfide compound, polysulfide compound, N-fluoropyridinium salt, or the like, for example.

The positive electrode active materials formed of organic compounds that are described above can be used individually or as a mixture of two or more types.

A negative electrode active material for an all-solid-state lithium ion secondary battery may be an allotrope of carbon such as graphite or coke. Note that a negative electrode active material formed of an allotrope of carbon can be used in a mixed or coated form with a metal, metal salt, oxide, or the like. Examples of negative electrode active materials that can be used also include oxides and sulfates of silicon, tin, zinc, manganese, iron, nickel, and the like; lithium metal; lithium alloys such as Li-Al, Li-Bi-Cd, and Li-Sn-Cd; lithium transition metal nitrides; and silicone.

The negative electrode active materials described above can be used individually or as a mixture of two or more types.

Note that the particle diameter of the above-described electrode active material (positive electrode active material or negative electrode active material) can be the same as that of a conventionally used electrode active material without any specific limitations. Moreover, the amount of the above-described electrode active material that is compounded in the slurry composition can be the same as that of a conventionally used electrode active material without any specific limitations.

### <Conductive material>

The conductive material that is contained in the presently disclosed slurry composition (slurry composition for an electrode mixed material layer) is for ensuring electrical contact between electrode active material particles in an electrode mixed material layer that is formed as a solid electrolyte-containing layer using the slurry composition. Note that the shape of the conductive material can be any shape such as a roughly spherical shape, a fibrous shape, or a plate-like shape without any specific limitations.

Examples of conductive materials that can be used include conductive carbon materials such as carbon black (for example, acetylene black, Ketjenblack^{®} (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber; and fibers and foils of various metals.

The conductive materials described above can be used individually or as a mixture of two or more types. Of these conductive materials, acetylene black is preferable from a viewpoint of further improving output characteristics and cycle characteristics of an all-solid-state secondary battery.

Note that the size (particle diameter, fiber diameter, fiber length, etc.) of the conductive material described above can be the same as that of a conventionally used conductive material without any specific limitations.

The content of the conductive material in the slurry composition is preferably 0.1 parts by mass or more, and more preferably 0.5 parts by mass or more per 100 parts by mass of the electrode active material, and is preferably 10 parts by mass or less, and more preferably 7 parts by mass or less per 100 parts by mass of the electrode active material. When the amount of the conductive material is within any of the ranges set forth above, electrical contact among the electrode active material can be sufficiently ensured, and output characteristics and cycle characteristics of an all-solid-state secondary battery can be further improved.

### <Other components>

Examples of other components that can optionally be contained in the presently disclosed slurry composition include, but are not specifically limited to, binders other than the previously described polymer A, dispersants, leveling agents, defoamers, and reinforcing materials. These other components are not specifically limited so long as they do not influence battery reactions. Moreover, one other component may be used individually, or two or more other components may be used in combination in a freely selected ratio.

### <Production of slurry composition>

The slurry composition set forth above can be obtained by mixing the above-described components by any mixing method, for example, without any specific limitations. In a situation in which a slurry composition for an electrode mixed material layer that contains an electrode active material and a conductive material is to be produced, the conductive material may be premixed with the polymer A to produce a conductive material dispersion liquid, and then the obtained conductive material dispersion liquid may be mixed with the electrode active material.

### (Solid electrolyte-containing layer)

The presently disclosed solid electrolyte-containing layer is a layer that contains a solid electrolyte and may, for example, be an electrode mixed material layer (positive electrode mixed material layer or negative electrode mixed material layer) that gives and receives electrons through electrochemical reactions, a solid electrolyte layer that is disposed between a positive electrode mixed material layer and a negative electrode mixed material layer that are in opposition to each other, or the like.

Moreover, the presently disclosed solid electrolyte-containing layer is a layer that is formed using the presently disclosed slurry composition set forth above. For example, the presently disclosed solid electrolyte-containing layer can be formed by applying the slurry composition set forth above onto the surface of a suitable substrate to form a coating film and subsequently drying the coating film that is formed. In other words, the presently disclosed solid electrolyte-containing layer is formed of a dried product of the slurry composition set forth above, normally contains a solid electrolyte and the polymer A, and can optionally contain an electrode active material, a conductive material, and other components. Note that components contained in the solid electrolyte-containing layer are components that were contained in the slurry composition set forth above, and the content ratio of these components, with the exception of a solvent, is normally the same as the content ratio thereof in the slurry composition.

The presently disclosed solid electrolyte-containing layer can be used to produce an all-solid-state secondary battery having excellent output characteristics and cycle characteristics as a result of the solid electrolyte-containing layer being formed from the presently disclosed slurry composition.

### <Substrate>

No limitations are placed on the substrate onto which the slurry composition is applied. For example, a coating film of the slurry composition may be formed on the surface of a releasable substrate, this coating film may be dried to form a solid electrolyte-containing layer, and then the releasable substrate may be peeled from the solid electrolyte-containing layer. The solid electrolyte-containing layer that is peeled from the releasable substrate in this manner can be used as a free-standing film in formation of a battery member (for example, an electrode or a solid electrolyte layer) of an all-solid-state secondary battery.

Alternatively, a current collector or an electrode may be used as the substrate from a viewpoint of omitting a step of peeling the solid electrolyte-containing layer from a releasable substrate and thereby increasing production efficiency of a battery member. For example, when an electrode mixed material layer is to be produced, it is preferable that the slurry composition is applied onto a current collector that serves as a substrate.

### «Releasable substrate»

The releasable substrate is not specifically limited and may be a known releasable substrate such as an imide film.

### <<Current collector>>

The current collector is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

### «Electrode»

The electrode (positive electrode or negative electrode) is not specifically limited and may be an electrode that is obtained by forming an electrode mixed material layer containing an electrode active material, a solid electrolyte, and a binder on a current collector such as described above.

The electrode active material, solid electrolyte, and binder that are contained in the electrode mixed material layer of the electrode are not specifically limited, and known examples thereof can be used. Note that the electrode mixed material layer of the electrode may be a layer that corresponds to the presently disclosed solid electrolyte-containing layer.

### <Formation method of solid electrolyte-containing layer>

Specific examples of methods by which the solid electrolyte-containing layer may be formed include:
(1) a method in which the presently disclosed slurry composition is applied onto the surface of a current collector or electrode (surface at the electrode mixed material layer-side in the case of an electrode; same applies below) and is then dried;
(2) a method in which a current collector or an electrode is immersed in the presently disclosed slurry composition and is then dried; and
(3) a method in which the presently disclosed slurry composition is applied onto a releasable substrate and is dried to produce a solid electrolyte-containing layer that is then transferred onto the surface of an electrode.

Of these methods, methods (1) and (3) are particularly preferable due to the ease of controlling the thickness of the solid electrolyte-containing layer.

### «Application»

Examples of methods by which the slurry composition may be applied onto the substrate include, but are not specifically limited to, doctor blading, reverse roll coating, direct roll coating, gravure coating, extrusion coating, and brush coating.

### <<Drying>>

The slurry composition on the substrate may be dried by any commonly known method without any specific limitations. Examples of drying methods that may be used include drying by warm, hot, or low-humidity air, drying in a vacuum, and drying by irradiation with infrared light, electron beams, or the like.

In a case in which the solid electrolyte-containing layer is an electrode mixed material layer, the solid electrolyte-containing layer may be subjected to a pressing process by roll pressing or the like after drying. This pressing process enables further densification of the obtained electrode mixed material layer.

### <<Transfer>>

The method by which the solid electrolyte-containing layer is transferred onto the surface of an electrode or the like in method (3) may be any commonly known transfer method without any specific limitations.

### (Electrode)

An electrode that is obtained by forming an electrode mixed material layer on a current collector using the presently disclosed slurry composition for an electrode mixed material layer contains at least an inorganic solid electrolyte, an electrode active material, and the polymer A in the electrode mixed material layer and can cause an all-solid-state secondary battery to display excellent output characteristics and cycle characteristics.

### (Solid electrolyte layer)

A solid electrolyte layer that is formed using the presently disclosed slurry composition for a solid electrolyte layer contains at least an inorganic solid electrolyte and the polymer A and can cause an all-solid-state secondary battery to display excellent output characteristics and cycle characteristics.

### (All-solid-state secondary battery)

The presently disclosed all-solid-state secondary battery includes the presently disclosed solid electrolyte-containing layer set forth above. The presently disclosed all-solid-state secondary battery may include a positive electrode, a solid electrolyte layer, and a negative electrode, for example, wherein at least one among: a positive electrode mixed material layer of the positive electrode; a negative electrode mixed material layer of the negative electrode; and the solid electrolyte layer is the presently disclosed solid electrolyte-containing layer. In other words, the presently disclosed all-solid-state secondary battery includes at least one among: a positive electrode including a positive electrode mixed material layer formed using a slurry composition for a positive electrode mixed material layer serving as the presently disclosed slurry composition for an all-solid-state secondary battery; a negative electrode including a negative electrode mixed material layer formed using a slurry composition for a negative electrode mixed material layer serving as the presently disclosed slurry composition for an all-solid-state secondary battery; and a solid electrolyte layer formed using a slurry composition for a solid electrolyte layer serving as the presently disclosed slurry composition for an all-solid-state secondary battery.

The presently disclosed all-solid-state secondary battery has excellent output characteristics and cycle characteristics as a result of including the presently disclosed solid electrolyte-containing layer.

Note that from a viewpoint of further improving output characteristics and cycle characteristics, it is preferable that the positive electrode mixed material layer of the positive electrode, the negative electrode mixed material layer of the negative electrode, and the solid electrolyte layer are each the presently disclosed solid electrolyte-containing layer in the presently disclosed all-solid-state secondary battery.

Note that any electrode for an all-solid-state secondary battery can be used in the presently disclosed all-solid-state secondary battery as an electrode for an all-solid-state secondary battery including an electrode mixed material layer that does not correspond to the presently disclosed solid electrolyte-containing layer without any specific limitations so long as it includes an electrode mixed material layer that does not correspond to the presently disclosed solid electrolyte-containing layer.

Moreover, any solid electrolyte layer, such as a solid electrolyte layer described in JP2012-243476A, JP2013-143299A, JP2016-143614A, or the like, for example, can be used in the presently disclosed all-solid-state secondary battery as a solid electrolyte layer that does not correspond to the presently disclosed solid electrolyte-containing layer without any specific limitations.

The presently disclosed all-solid-state secondary battery can be obtained by stacking the positive electrode and the negative electrode such that the positive electrode mixed material layer of the positive electrode and the negative electrode mixed material layer of the negative electrode are in opposition via the solid electrolyte layer and optionally performing pressing thereof to obtain a laminate, subsequently placing the laminate in a battery container in that form or after rolling, folding, or the like in accordance with the battery shape, and then sealing the battery container. Note that an expanded metal, an overcurrent preventing device such as a fuse or a PTC device, a lead plate, or the like may be placed in the battery container as necessary in order to prevent pressure increase inside the battery and occurrence of overcharging or overdischarging. The shape of the battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%", "parts", and "ppm" used in expressing quantities are by mass, unless otherwise specified.

In the examples and comparative examples, the following methods were used to measure or evaluate the weight-average molecular weight of a polymer, the breaking strength recovery rate of a film formed of a polymer, and the output characteristics and cycle characteristics of an all-solid-state secondary battery.

### <Weight-average molecular weight>

The weight-average molecular weight of a polymer A was measured by gel permeation chromatography (GPC) under the following measurement conditions using a LiBr-DMF (dimethylformamide) solution of 10 mM in concentration.
- Separation column: Shodex KD-806M (produced by Showa Denko K.K.)
- Detector: Differential refractive index detector RID-10A (produced by Shimadzu Corporation)
- Eluent flow rate: 0.3 mL/min
- Column temperature: 40°C
- Standard polymer: TSK standard polystyrene (produced by Tosoh Corporation)

### <Breaking strength recovery rate>

A polymer solution containing a polymer and a solvent was dried in a 40°C environment for 10 hours and was then further dried at 80°C for 3 hours to obtain a polymer film of 1 mm in thickness.

The breaking strength of the obtained polymer film was measured by a method in accordance with JIS K6251. First, the polymer film was punched out with a No. 6 dumbbell shape to obtain a test specimen X. This test specimen X was subjected to a tensile test at a tensing rate of 50 mm/min using a tensile test machine including a non-contact video extensometer inside a dry room (atmosphere temperature: 25°C) controlled to a dew point of -40°C. The initial distance between reference lines was 20 mm. The determined tensile strength at breaking was taken to be the breaking strength W1.

A polymer film was separately prepared from the polymer solution by the same procedure as described above. This polymer film was punched out with a No. 6 dumbbell shape to obtain a dumbbell-shaped film. A parallel section of the dumbbell-shaped film (rectangular section defined by two reference lines that was located centrally in the dumbbell-shaped film) was cut using a cutter so as to obtain two cut pieces. Note that cutting of the dumbbell-shaped film was performed such that the cut surfaces that were formed passed through the longitudinal direction center of the parallel section of the dumbbell-shaped film and were perpendicular to the parallel section (i.e., perpendicular to a pair of parallel lines forming the parallel section).

The cut surfaces of these two cut pieces were brought into contact and then the two cut pieces, in a state of contact with each other, were sandwiched between a pair of glass plates from above and below in the thickness direction and were fixed using a clip. The two cut pieces, in a sandwiched state by the glass plates, were left at rest in a 130°C oven for 10 hours, and, once 10 hours had passed, were left until they returned to normal temperature to obtain a test specimen Y.

This test specimen Y was subjected to a tensile test in the same manner as the test specimen X, and the determined tensile strength at breaking was taken to be the breaking strength W2.

The breaking strength recovery rate (%) (= W2/W1 × 100) was calculated from the breaking strengths W1 and W2.

### <Output characteristics>

Three all-solid-state secondary battery cells were charged to 4.2 V by a 0.1C constant-current method and subsequently discharged to 3.0 V at 0.1C in order to determine the 0.1C discharge capacity. Next, the cells were charged to 4.2 V at 0.1C and subsequently discharged to 3.0 V at 2C in order to determine the 2C discharge capacity. An average value of the 0.1C discharge capacity for the three cells was taken to be a discharge capacity (a), an average value of the 2C discharge capacity for the three cells was taken to be a discharge capacity (b), and a ratio (capacity ratio) of the discharge capacity (b) relative to the discharge capacity (a) was calculated (= discharge capacity (b)/discharge capacity (a) × 100(%)) and was evaluated by the following standard. A larger value for the capacity ratio indicates that the all-solid-state secondary battery has better output characteristics.
A: Capacity ratio of 80% or more
B: Capacity ratio of not less than 70% and less than 80%
C: Capacity ratio of not less than 60% and less than 70%
D: Capacity ratio of less than 60%

### <Cycle characteristics>

An all-solid-state secondary battery was subjected to 50 cycles of charging and discharging at 25°C in which the all-solid-state secondary battery was charged from 3 V to 4.2 V at 0.2C and then discharged from 4.2 V to 3 V at 0.2C. A ratio of the 0.2C discharge capacity of the 50^{th} cycle relative to the 0.2C discharge capacity of the 1^{st} cycle was calculated as a percentage, and this value was taken to be the capacity maintenance rate and was evaluated by the following standard. A larger value for the capacity maintenance rate indicates that there is less loss of discharge capacity and that the all-solid-state secondary battery has better cycle characteristics.
A: Capacity maintenance rate of 90% or more
B: Capacity maintenance rate of not less than 80% and less than 90%
C: Capacity maintenance rate of not less than 70% and less than 80%
D: Capacity maintenance rate of less than 70%

### (Example 1)

### <Production of polysulfide bond-containing monomer>

In a 1 L four-necked flask made of glass, 100 g of 2,2,6,6-tetramethyl-4-piperidyl methacrylate (443 mmol; ADK STAB^{®} LA-87 (ADK STAB is a registered trademark in Japan, other countries, or both) produced by Adeka Corporation) was dissolved in 364 mL of dimethylformamide. Next, 39.7 g (484 mmol) of sodium acetate was added to the resultant solution and was stirred therewith in an ice bath. Once the liquid temperature had dropped to 10°C or lower, 23.4 g (173 mmol) of disulfur dichloride was added dropwise over 30 minutes such that the liquid temperature did not rise above 10°C. After this dropwise addition, a reaction was performed for 30 minutes under stirring in a state in which the flask was immersed in the ice bath. Thereafter, the reaction liquid was added to 500 mL of water cooled in the ice bath, and a white solid that precipitated was filtered off and collected. Next, the white solid was recrystallized twice using methanol and was then dried under reduced pressure to yield the previously described compound No. 1 (bis(4-(methacryloyloxy)-2,2,6,6-tetramethylpiperidin-1-yl) disulfide), which is a polysulfide bond-containing monomer.

### <Production of polymer A and polymer solution>

A 1 L septum-equipped flask (reactor) including a stirrer was charged with 90 parts of deionized water and 0.5 parts of sodium lauryl sulfate as an emulsifier, the gas phase was purged with nitrogen gas, and the temperature was raised to 60°C. Thereafter, 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 4.0 parts of the compound No. 1 as a polysulfide bond-containing monomer, 50.0 parts of n-butyl acrylate and 24.0 parts of ethyl acrylate as (meth)acrylic acid ester monomers, 10.0 parts of styrene as an aromatic vinyl monomer, 10.5 parts of acrylonitrile as a nitrile group-containing monomer, and 1.5 parts of 2-hydroxyethyl methacrylate as a hydroxy group-containing monomer. This monomer composition was continuously added into the 1 L septum-equipped flask over 3 hours to perform polymerization (emulsion polymerization). The reaction was carried out at 60°C during addition of the monomer composition. Once this addition was complete, a further 2 hours of stirring was performed at 80°C to yield a water dispersion of a polymer A.

An appropriate amount of butyl butyrate as a solvent was added to the obtained water dispersion of the polymer A to yield a mixture. Thereafter, water and excess butyl butyrate were removed from the mixture through distillation under reduced pressure at 80°C to yield a polymer solution (solution containing polymer A and butyl butyrate; solid content concentration: 10%). This polymer solution was used to measure the breaking strength recovery rate of the polymer A. The weight-average molecular weight of the polymer A was also measured. The results are shown in Table 1.

### <Production of slurry composition for positive electrode mixed material layer>

After mixing 70 parts of lithium cobalt oxide (number-average particle diameter: 11.5 µm) as a positive electrode active material, 25.5 parts of sulfide glass formed of Li₂S and P₂S₅ (Li₂S/P₂S₅ = 70 mol%/30 mol%; number-average particle diameter: 0.9 µm) as an inorganic solid electrolyte, 2.5 parts of acetylene black as a conductive material, and 1.15 parts of the polymer solution obtained as described above (amount in terms of solid content of polymer A; 4.5 parts per 100 parts of inorganic solid electrolyte) and further adding butyl butyrate as a solvent to adjust the solid content concentration to 80%, these materials were mixed for 60 minutes in a planetary mixer. Thereafter, butyl butyrate was further added to adjust the solid content concentration to 65%, and then 10 minutes of mixing was performed to produce a slurry composition for a positive electrode mixed material layer.

### <Production of slurry composition for negative electrode mixed material layer>

After mixing 60 parts of graphite (number-average particle diameter: 20 µm) as a negative electrode active material, 36.5 parts of sulfide glass formed of Li₂S and P₂S₅ (Li₂S/P₂S₅ = 70 mol%/30 mol%; number-average particle diameter: 0.9 µm) as an inorganic solid electrolyte, 1.5 parts of acetylene black as a conductive material, 2.85 parts of the polymer solution obtained as described above (amount in terms of solid content of polymer A; 7.8 parts per 100 parts of inorganic solid electrolyte) and further adding butyl butyrate as a solvent to adjust the solid content concentration to 65%, these materials were mixed for 60 minutes in a planetary mixer. Thereafter, butyl butyrate was further added to adjust the solid content concentration to 60%, and then mixing was performed in the planetary mixer to produce a slurry composition for a negative electrode mixed material layer.

### <Production of slurry composition for solid electrolyte layer>

After mixing 100 parts of sulfide glass formed of Li₂S and P₂S₅ (Li₂S/P₂S₅ = 70 mol%/30 mol%; number-average particle diameter: 0.9 µm) as an inorganic solid electrolyte and 1.5 parts of the polymer solution obtained as described above (amount in terms of solid content of polymer A; 1.5 parts per 100 parts of inorganic solid electrolyte) and further adding butyl butyrate as a solvent to adjust the solid content concentration to 65 mass% inside a glove box (moisture concentration: 0.6 ppm; oxygen concentration: 1.8 ppm) under an argon gas atmosphere, these materials were mixed for 60 minutes in a planetary mixer. Thereafter, butyl butyrate was further added to adjust the solid content concentration to 55%, and then mixing was performed in the planetary mixer to produce a slurry composition for a solid electrolyte layer.

### <Production of positive electrode>

The slurry composition for a positive electrode mixed material layer described above was applied onto the surface of a current collector (aluminum foil; thickness: 20 µm) and was dried (60 minutes at temperature of 120°C) to form a positive electrode mixed material layer of 75 µm in thickness and obtain a positive electrode.

### <Production of negative electrode>

The slurry composition for a negative electrode mixed material layer described above was applied onto the surface of a current collector (copper foil; thickness: 15 µm) and was dried (60 minutes at temperature of 120°C) to form a negative electrode mixed material layer of 90 µm in thickness and obtain a negative electrode.

### <Production of all-solid-state secondary battery>

Next, the slurry composition for a solid electrolyte layer described above was applied onto imide film (thickness: 25 µm) and was dried (60 minutes at temperature of 120°C) to form a solid electrolyte layer of 150 µm in thickness. The solid electrolyte layer on the imide film and the positive electrode were affixed such that the solid electrolyte layer and the positive electrode mixed material layer were in contact and were then subjected to a pressing process such that 400 MPa of pressure (pressing pressure) was applied in order to transfer the solid electrolyte layer onto the positive electrode mixed material layer from the imide film and thereby obtain a solid electrolyte layer-equipped positive electrode.

This solid electrolyte layer-equipped positive electrode and the negative electrode were affixed such that the solid electrolyte layer of the solid electrolyte layer-equipped positive electrode and the negative electrode mixed material layer of the negative electrode were in contact and were then subjected to a pressing process such that 400 MPa of pressure (pressing pressure) was applied to the solid electrolyte layer of the solid electrolyte layer-equipped positive electrode in order to obtain an all-solid-state secondary battery. The thickness of the solid electrolyte layer in the all-solid-state secondary battery after pressing was 120 µm. Output characteristics and cycle characteristics were evaluated for this all-solid-state secondary battery. The results are shown in Table 1.

### (Example 2)

A polysulfide bond-containing monomer, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that a polymer A and a polymer solution that were produced as described below were used. The results are shown in Table 1.

### <Production of polymer A and polymer solution>

A reactor was charged with 98 parts of ethyl acetate, 5.0 parts of the compound No. 1 as a polysulfide bond-containing monomer, 20.0 parts of ethyl acrylate and 70.0 parts of AM-90G (methoxy polyethylene glycol #400 acrylate produced by Shin-Nakamura Chemical Co., Ltd.; corresponding to compound of formula (III) for which R^{C} is a hydrogen atom, R^{D} is a methyl group, and m = 9) as (meth)acrylic acid ester monomers, 5.0 parts of acrylonitrile as a nitrile group-containing monomer, and 2.5 parts of an azo initiator V-65 (produced by FUJIFILM Wako Pure Chemical Corporation) as a polymerization initiator, and polymerization (solution polymerization) was initiated at 55°C. At 6 hours after the start of polymerization, the reaction temperature was adjusted to 70°C, 0.5 parts of the azo initiator V-65 was supplementarily added into the reactor, and a reaction was performed for a further 3 hours to yield an ethyl acetate solution of a polymer A.

An appropriate amount of butyl butyrate as a solvent was added to the obtained ethyl acetate solution of the polymer to yield a mixture. Thereafter, ethyl acetate and excess butyl butyrate were removed from the mixture through distillation under reduced pressure at 80°C to yield a polymer solution (solution containing polymer A and butyl butyrate; solid content concentration: 10%).

### (Example 3)

A polysulfide bond-containing monomer, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that a polymer A and a polymer solution that were produced as described below were used. The results are shown in Table 1.

### <Production of polymer A and polymer solution>

A reactor was charged with 2 parts of potassium oleate as an emulsifier, 0.1 parts of potassium phosphate as a stabilizer, 150 parts of water, 5.0 parts of the compound No. 1 as a polysulfide bond-containing monomer, 30.0 parts of n-butyl acrylate as a (meth)acrylic acid ester monomer, 20.0 parts of acrylonitrile as a nitrile group-containing monomer, 45.0 parts of 1,3-butadiene as an aliphatic conjugated diene monomer, and 0.31 parts of t-dodecyl mercaptan as a molecular weight modifier. Polymerization (emulsion polymerization) was initiated at 10°C in the presence of 0.015 parts of ferrous sulfate as an activator and 0.05 parts of paramenthane hydroperoxide as a polymerization initiator. At the point at which the polymerization conversion rate reached 85%, 0.2 parts of hydroxylamine sulfate was added per 100 parts of monomer to end the polymerization. Next, unreacted monomer was collected through steam distillation at 70°C under reduced pressure, and then 2 parts of an alkylated phenol was added as an antioxidant to yield a copolymer latex.

A 1 L autoclave equipped with a stirrer was charged with 400 mL (total solid content: 48 g) of the obtained copolymer latex, and nitrogen gas was passed for 10 minutes so as to remove dissolved oxygen in the copolymer latex. Thereafter, 50 mg of palladium acetate as a hydrogenation reaction catalyst was dissolved in 180 mL of water to which 4 molar equivalents of nitric acid relative to Pd had been added and was then added into the autoclave. Purging of the system with hydrogen gas was performed twice, and then the contents of the autoclave were heated to 50°C in a state in which the pressure was raised to 3 MPa with hydrogen gas, and a hydrogenation reaction was carried out for 6 hours.

The contents of the autoclave were restored to normal temperature, the system was converted to a nitrogen atmosphere, and then concentrating was performed to a solid content concentration of 40% using an evaporator to yield a water dispersion of a polymer A.

An appropriate amount of butyl butyrate as a solvent was added to the obtained water dispersion of the polymer A to yield a mixture. Thereafter, water and excess butyl butyrate were removed from the mixture through distillation under reduced pressure at 80°C to yield a polymer solution (solution containing polymer A and butyl butyrate; solid content concentration: 10%).

Note that ¹H-NMR analysis was performed with respect to a dry polymer that was obtained by coagulating 100 g of the obtained polymer solution in 1 L of methanol and then performing 12 hours of vacuum drying at a temperature of 60°C. The proportional content (mass%) of each structural unit included in the polymer A was calculated based on the obtained analysis values. The results are shown in Table 1.

### (Examples 4 and 5)

A polysulfide bond-containing monomer, a polymer A, a polymer solution, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that in production of the polymer A and the polymer solution, the amounts of the compound No. 1 (No. 1), n-butyl acrylate (BA), ethyl acrylate (EA), styrene (St), acrylonitrile (AN), and 2-hydroxyethyl methacrylate (HEMA) serving as monomers were changed as indicated below. The results are shown in Table 1.

### <Example 4>

No. 1: 9.0 parts, BA: 47.0 parts, EA: 22.0 parts,
AN: 10.5 parts, St: 10.0 parts, HEMA: 1.5 parts

### <Example 5>

No. 1: 1.0 parts, BA: 53.0 parts, EA: 24.0 parts,
AN: 10.5 parts, St: 10.0 parts, HEMA: 1.5 parts

### (Examples 6, 7, and 14)

A polysulfide bond-containing monomer, a polymer A, a polymer solution, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that in production of the polymer A and the polymer solution, the types and amounts of used monomers were changed as indicated below. The results are shown in Tables 1 and 2.

### <Example 6>

No. 1: 5.0 parts,
2EHA (2-ethylhexyl acrylate): 85.0 parts,
AN: 10.0 parts

### <Example 7>

No. 1: 5.0 parts, BA: 15.0 parts, AN: 17.0 parts,
St: 60.0 parts, HEMA: 3.0 parts

### <Example 14>

No. 1: 4.0 parts, BA: 50.0 parts, EA: 24.0 parts,
St: 20.5 parts, HEMA: 1.5 parts

### (Examples 8 to 11)

A polysulfide bond-containing monomer, a polymer A, a polymer solution, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that in production of the polymer A, the polymer solution, the slurry composition for a positive electrode mixed material layer, the slurry composition for a negative electrode mixed material layer, and the slurry composition for a solid electrolyte layer, xylene (Example 8), anisole (Example 9), diisobutyl ketone (Example 10), or isobutyl isobutyrate (Example 11) was used instead of butyl butyrate as a solvent. The results are shown in Tables 1 and 2.

### (Example 12)

A polysulfide bond-containing monomer, a polymer A, a polymer solution, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that the amount of the polymer A was changed to 0.9 parts per 100 parts of the inorganic solid electrolyte in production of the slurry composition for a positive electrode mixed material layer and the slurry composition for a negative electrode mixed material layer and that the amount of the polymer A was changed to 0.5 parts per 100 parts of the inorganic solid electrolyte in production of the slurry composition for a solid electrolyte layer. The results are shown in Table 2.

### (Example 13)

A polysulfide bond-containing monomer, a polymer A, a polymer solution, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that the amount of the polymer A was changed to 13.5 parts per 100 parts of the inorganic solid electrolyte in production of the slurry composition for a positive electrode mixed material layer and the slurry composition for a negative electrode mixed material layer and that the amount of the polymer A was changed to 14.5 parts per 100 parts of the inorganic solid electrolyte in production of the slurry composition for a solid electrolyte layer. The results are shown in Table 2.

### (Comparative Examples 1 to 4)

A polymer was produced and then a solution (polymer solution) of this polymer was produced by performing operations in the same manner as for the polymer A in Example 1 with the exception that the types and amounts of used monomers were changed as indicated below.

Moreover, a slurry composition for a positive electrode mixed material layer, a slurry composition for a negative electrode mixed material layer, a slurry composition for a solid electrolyte layer, a positive electrode, a negative electrode, and an all-solid-state secondary battery were prepared and various evaluations were performed in the same way as in Example 1 with the exception that the polymer and the polymer solution obtained as described above were used instead of the polymer A and the polymer solution thereof. The results are shown in Table 2.

### <Comparative Example 1>

BA: 50.0 parts, EA: 28.0 parts, AN: 10.5 parts,
St: 10.0 parts, HEMA: 1.5 parts

### <Comparative Example 2>

No. 1: 3.5 parts, BA: 51.5 parts, EA: 45.0 parts,

### <Comparative Example 3>

No. 1: 5.0 parts, BA: 5.0 parts, AN: 20.0 parts,
St: 67.0 parts, HEMA: 3.0 parts

### <Comparative Example 4>

No. 1: 10.0 parts, BA: 45.0 parts, EA: 23.0 parts,
AN: 10.5 parts, St: 10.0 parts, HEMA: 1.5 parts

In the following Tables 1 and 2:
"No. 1" indicates structural unit derived from compound No. 1 (bis(4-(methacryloyloxy)-2,2,6,6-tetramethylpiperidin-1-yl) disulfide unit);
"BA" indicates n-butyl acrylate unit;
"EA" indicates ethyl acrylate unit;
"AM-90G" indicates methoxy polyethylene glycol #400 acrylate unit;
"2EHA" indicates 2-ethylhexyl acrylate unit;
"AN" indicates acrylonitrile unit;
"HEMA" indicates hydroxyethyl methacrylate unit;
"H-BD" indicates hydrogenated 1,3-butadiene unit;
"BD" indicates 1,3-butadiene unit;
"Mw" indicates weight-average molecular weight;
"DIBK" indicates diisobutyl ketone;
"Sulfide" indicates sulfide inorganic solid electrolyte;
"Content of polymer A or like" indicates content of polymer A or the like per 100 parts by mass of inorganic solid electrolyte;
"Positive" indicates slurry composition for positive electrode mixed material layer;
"Solid" indicates slurry composition for solid electrolyte layer; and
"Negative" indicates slurry composition for negative electrode mixed material layer.

**[Table 1]**

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| Slurry composition | Polymer A or like | Chemical composition [mass%] | Polysulfide bond-containing unit monomer | No. 1 | 4.0 | 5.0 | 5.0 | 9.0 | 1.0 | 5.0 | 5.0 | 4.0 | 4.0 |
| | | | (Meth)acrylic acid ester monomer unit | BA | 50.0 | 0.0 | 30.0 | 47.0 | 53.0 | 0.0 | 15.0 | 50.0 | 50.0 |
| | | | | EA | 24.0 | 20.0 | 0.0 | 22.0 | 24.0 | 0.0 | 0.0 | 24.0 | 24.0 |
| | | | | AM-90G | 0.0 | 70.0 | 0.0 | 0.0 | 0.0 | 0.0 | 0.0 | 0.0 | 0.0 |
| | | | | 2EHA | 0.0 | 0.0 | 0.0 | 0.0 | 0.0 | 85.0 | 0.0 | 0.0 | 0.0 |
| | | | Other structural units | AN | 10.5 | 5.0 | 20.0 | 10.5 | 10.5 | 10.0 | 17.0 | 10.5 | 10.5 |
| | | | | St | 10.0 | 0.0 | 0.0 | 10.0 | 10.0 | 0.0 | 60.0 | 10.0 | 10.0 |
| | | | | HEMA | 1.5 | 0.0 | 0.0 | 1.5 | 1.5 | 0.0 | 3.0 | 1.5 | 1.5 |
| | | | | H-BD | 0.0 | 0.0 | 43.2 | 0.0 | 0.0 | 0.0 | 0.0 | 0.0 | 0.0 |
| | | | | BD | 0.0 | 0.0 | 1.8 | 0.0 | 0.0 | 0.0 | 0.0 | 0.0 | 0.0 |
| | | Mw [-] | | | 1,200,000 | 200,000 | 400,000 | 1,200,000 | 1,000,000 | 1,000,000 | 900,000 | 800,000 | 1,100,000 |
| | | Breaking strength recovery rate [%] | | | 80 | 85 | 85 | 90 | 65 | 85 | 90 | 80 | 80 |
| | Solvent | | | | Butyl butyrate | Butyl butyrate | Butyl butyrate | Butyl butyrate | Butyl butyrate | Butyl butyrate | Butyl butyrate | Xylene | Anisole |
| | Inorganic solid electrolyte | | | | Sulfide | Sulfide | Sulfide | Sulfide | Sulfide | Sulfide | Sulfide | Sulfide | Sulfide |
| | Content of polymer A or like [parts by mass] | | | Positive | 4.5 | 4.5 | 4.5 | 4.5 | 4.5 | 4.5 | 4.5 | 4.5 | 4.5 |
| | | | | Solid | 1.5 | 1.5 | 1.5 | 1.5 | 1.5 | 1.5 | 1.5 | 1.5 | 1.5 |
| | | | | Negative | 7.8 | 7.8 | 7.8 | 7.8 | 7.8 | 7.8 | 7.8 | 7.8 | 7.8 |
| Output characteristics | | | | | A | A | A | B | A | A | B | A | A |
| Cycle characteristics | | | | | A | A | A | B | B | B | B | A | A |

**[Table 2]**

| | | | | | Example 10 | Example 11 | Example 12 | Example 13 | Example 14 | Comparative Example 1 | Comparative Example 2 | Comparative Example 3 | Comparative Example 4 |
|---|---|---|---|---|---|---|---|---|---|---|---|---|---|
| Slurry composition | Polymer A or like | Chemical composition [mass%] | Polysulfide bond-containing monomer unit | No. 1 | 4.0 | 4.0 | 4.0 | 4.0 | 4.0 | 0.0 | 3.5 | 5.0 | 10.0 |
| | | | (Meth)acrylic acid ester monomer unit | BA | 50.0 | 50.0 | 50.0 | 50.0 | 50.0 | 50.0 | 51.5 | 5.0 | 45.0 |
| | | | | EA | 24.0 | 24.0 | 24.0 | 24.0 | 24.0 | 28.0 | 45.0 | 0.0 | 23.0 |
| | | | | AM-90G | 0.0 | 0.0 | 0.0 | 0.0 | 0.0 | 0.0 | 0.0 | 0.0 | 0.0 |
| | | | | 2EHA | 0.0 | 0.0 | 0.0 | 0.0 | 0.0 | 0.0 | 0.0 | 0.0 | 0.0 |
| | | | Other structural units | AN | 10.5 | 10.5 | 10.5 | 10.5 | 0.0 | 10.5 | 0.0 | 20.0 | 10.5 |
| | | | | St | 10.0 | 10.0 | 10.0 | 10.0 | 20.5 | 10.0 | 0.0 | 67.0 | 10.0 |
| | | | | HEMA | 1.5 | 1.5 | 1.5 | 1.5 | 1.5 | 1.5 | 0.0 | 3.0 | 1.5 |
| | | | | H-BD | 0.0 | 0.0 | 0.0 | 0.0 | 0.0 | 0.0 | 0.0 | 0.0 | 0.0 |
| | | | | BD | 0.0 | 0.0 | 0.0 | 0.0 | 0.0 | 0.0 | 0.0 | 0.0 | 0.0 |
| | | Mw [-] | | | 1,400,000 | 1,300,000 | 1,200,000 | 1,200,000 | 1,200,000 | 1,000,000 | 1,100,000 | 1,100,000 | 1,100,000 |
| | | Breaking strength recovery rate [%] | | | 80 | 80 | 80 | 80 | 80 | 0 | 80 | 85 | 95 |
| | Solvent | | | | DIBK | Isobutyl isobutyrate | Butyl butyrate | Butyl butyrate | Butyl butyrate | Butyl butyrate | Butyl butyrate | Butyl butyrate | Butyl butyrate |
| | Inorganic solid electrolyte | | | | Sulfide | Sulfide | Sulfide | Sulfide | Sulfide | Sulfide | Sulfide | Sulfide | Sulfide |
| | Content of polymer A or like [parts by mass] | | | Positive | 4.5 | 4.5 | 0.9 | 13.5 | 4.5 | 4.5 | 4.5 | 4.5 | 4.5 |
| | | | | Solid | 1.5 | 1.5 | 0.5 | 14.5 | 1.5 | 1.5 | 1.5 | 1.5 | 1.5 |
| | | | | Negative | 7.8 | 7.8 | 0.9 | 13.5 | 7.8 | 7.8 | 7.8 | 7.8 | 7.8 |
| Output characteristics | | | | | A | A | A | B | A | C | C | D | D |
| Cycle characteristics | | | | | A | A | B | B | A | D | D | C | C |

It can be seen from Tables 1 and 2 that it is possible to cause an all-solid-state secondary battery to display excellent output characteristics and cycle characteristics through the slurry compositions of Examples 1 to 14.

In contrast, it can be seen from Table 2 that output characteristics and cycle characteristics of an all-solid-state secondary battery deteriorate in Comparative Examples 1 to 4 in which the used slurry compositions each contain a polymer in which the proportional content of polysulfide bond-containing monomer units or the proportional content of (meth)acrylic acid ester monomer units is outside of a specific range.

### INDUSTRIAL APPLICABILITY

According to the present disclosure, it is possible to provide a slurry composition for an all-solid-state secondary battery that is capable of forming a solid electrolyte-containing layer that can cause an all-solid-state secondary battery to display excellent output characteristics and cycle characteristics.

Moreover, according to the present disclosure, it is possible to provide a solid electrolyte-containing layer that can cause an all-solid-state secondary battery to display excellent output characteristics and cycle characteristics and an all-solid-state secondary battery that has excellent output characteristics and cycle characteristics.

## Claims

1. A slurry composition for an all-solid-state secondary battery comprising a polymer A, an inorganic solid electrolyte, and a solvent, wherein
the polymer A includes a polysulfide bond-containing monomer unit in a proportion of not less than 0.5 mass% and not more than 9.5 mass% and includes a (meth)acrylic acid ester monomer unit in a proportion of not less than 10.0 mass% and not more than 95.0 mass%.

2. The slurry composition for an all-solid-state secondary battery according to claim 1, wherein the solvent includes one or more selected from the group consisting of an aromatic hydrocarbon, a ketone, an ester, and an ether.

3. The slurry composition for an all-solid-state secondary battery according to claim 1, wherein the polymer A further includes one or more selected from the group consisting of a carboxy group-containing monomer unit, a hydroxy group-containing monomer unit, a nitrile group-containing monomer unit, an aromatic vinyl monomer unit, an aliphatic conjugated diene monomer unit, and an alkylene structural unit.

4. The slurry composition for an all-solid-state secondary battery according to claim 1, wherein the polymer A further includes a nitrile group-containing monomer unit.

5. The slurry composition for an all-solid-state secondary battery according to claim 1, wherein the polysulfide bond-containing monomer unit has a partial structure of formula (I), shown below, 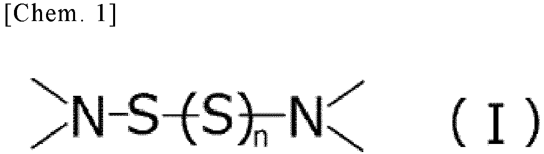 where, in formula (I), n is an integer of not less than 1 and not more than 10.

6. The slurry composition for an all-solid-state secondary battery according to claim 1, wherein the inorganic solid electrolyte includes either or both of a sulfide inorganic solid electrolyte and an oxide inorganic solid electrolyte.

7. The slurry composition for an all-solid-state secondary battery according to claim 1, wherein content of the polymer A is not less than 0.1 parts by mass and not more than 15.0 parts by mass per 100 parts by mass of the inorganic solid electrolyte.

8. The slurry composition for an all-solid-state secondary battery according to claim 1, further comprising an electrode active material.

9. The slurry composition for an all-solid-state secondary battery according to claim 8, further comprising a conductive material.

10. A solid electrolyte-containing layer formed using the slurry composition for an all-solid-state secondary battery according to any one of claims 1 to 9.

11. An all-solid-state secondary battery comprising the solid electrolyte-containing layer according to claim 10.
